# EUROPEAN PATENT APPLICATION

(11) **EP 1 101 994 A2**
(43) Date of publication of application: **23.05.2001**
(21) Application number: 00124839.2
(22) Date of filing: 14.11.2000
(51) Int. Cl.: F16L 11/11, F16L 11/118, B32B 1/08, B32B 7/02, B32B 27/34

(54) **Fuel hose**

(30) Priority: 16.11.1999 JP 32599299; 22.09.2000 JP 2000293980
(71) Applicant: Tokai Rubber Industries, Ltd., Komaki-shi, Aichi-ken, 485-8550 (JP)
(72) Inventor: Ito, Hiroaki, Kasugai-shi, Aichi-ken, 487-0035 (JP); Iio, Shinji, Inazawa-shi, Aichi-ken, 492-8017 (JP)
(74) Representative: Kuhnen & Wacker

(57) **Abstract**

In a fuel hose composed of an inner single layer or multilayer of a fluororesin and an outer single layer or multilayer of a thermoplastic resin, any two materials for the layers have a ratio 1 : 40 or below in melt viscosity as expressed in Pa·s. The wall formed by having its inner and outer layers co-extruded is free from any unevenness in thickness that would occur if their materials had a larger ratio in melt viscosity. Thus, it is impermeable to fuel, and has an improved adhesion between its inner and outer layers.

## Description

### BACKGROUND OF THE INVENTION

### Field of the Invention:

This invention relates to a fuel hose to be used as a fuel line. It has a multi-layered wall composed of at least an inner single layer or multilayer of a fluororesin and an outer single layer or multilayer of a thermoplastic resin. Those layers are formed by co-extrusion molding.

### Description of the Related Art:

The regulations as to evaporation of fuel from motor vehicles are becoming increasingly strict in view of environmental problems in the United States, and also in European countries and Japan. There has been an increasing demand for improved fuel hoses, since the evaporation of fuel from motor vehicles depends largely upon the quality of fuel hoses. There have been proposed fuel hoses having an inner layer of a fluororesin which is highly impermeable to a hydrocarbon fuel. For example, Japanese Patent Application Laid-Open No. 164273/1993, 173446/1995 or 311461/1998 discloses a fuel hose having a two-layered wall formed of an inner layer of an ethylene-tetrafluoroethylene copolymer (ETFE), which is a fluororesin, and an outer layer of a polyamide, or other thermoplastic resin. United States Patent No. 5,884,671 or 5,884,672 discloses a multi-layered fuel hose having an inner layer of ETFE.

A fuel hose having a multilayer as described above can be made by, for example, crosshead die extrusion, or co-extrusion. Crosshead die extrusion is a method in which a layer is extruded about an earlier extruded and solidified layer so as to adhere to it. Co-extrusion is a method in which a multilayer is extruded together so as to allow layers to adhere to each other in the molten state. The latter method appears to have an advantage from the standpoints of layer adhesion and production efficiency.

It is, however, often the case that a hose having a multi-layered wall formed by co-extrusion has a wall thickness lacking uniformity along its circumference. A hose may, for example, have a wall having an inner periphery which is not concentric with its outer periphery, or a wall having an irregularly uneven surface along its circumference. Its wall thickness lacking uniformity gives the hose a wall of lower fuel impermeability, since its portions of thinner thickness are more permeable to fuel. Moreover, it lowers the adhesive strength between the layers forming the wall.

### SUMMARY OF THE INVENTION

The inventors of this invention have experimentally found that the lack of uniformity in wall thickness of a hose is due to the difference in melt viscosity between the materials for the layers when co-extruded. A fluororesin has a very high melt viscosity, but a thermoplatic resin, such as a polyamide resin, has a considerably low melt viscosity. Their large difference in melt viscosity causes the problems as pointed out above. Moreover, an electrically conductive material, such as a carbon black, or metal powder, is sometimes added to an inner layer of a fluororesin for a fuel hose to prevent sparking. In such a case, the fluororesin has a still higher melt viscosity making a still greater difference from that of e.g. a polyamide resin. The problems as pointed out above are, therefore, still more serious. A fuel hose having its wall corrugated after extrusion is likely to have still greater problems in fuel impermeability and layer adhesion.

It is, therefore, an object of this invention to overcome the problems occurring from any difference in melt viscosity between the materials co-extruded to form a multilayer for the wall of a fuel hose. The inventor's studies indicate that it is effective to use materials each two of which have a ratio 1 : 40 or below in melt viscosity as expressed in Pa· s (SI unit). This enables to form a wall with a substantially uniform thickness and an improved layer adhesion. Its layer adhesion can be improved still more effectively by employing a separate approach as will be described. The melt viscosity of each material is measured in accordance with ISO 11443.

According to a first aspect of this invention, there is provided a fuel hose comprising an inner single layer or multilayer of a fluororesin and an outer single layer or multilayer of a thermoplastic resin, wherein the inner and outer layers are formed by co-extruding materials for the layers, any two of which have a ratio 1 : 40 or below in melt viscosity as expressed in Pa·s. In other words, one of any two materials has a melt viscosity which is not more than 40 times higher than that of the other material. Thus, each of the layers forming the wall has a uniform thickness along its circumference. The inner layer is highly impermeable to fuel and adheres firmly to the outer layer. This invention is not responsible for any uneven wall thickness for which a defective extruder or process is responsible.

It is considered usual that a fluororesin forming the inner layer has a melt viscosity which is higher than that of a thermoplastic resin forming the outer layer. According to the first aspect of this invention, therefore, their difference in melt viscosity is usually reduced by using a fluororesin having a lower melt viscosity for the inner layer, and/or a thermoplastic resin having a higher melt viscosity for the outer layer. A resin having a lower or higher melt viscosity can be obtained in a variety of ways, for example, by changing its molecular weight, or adding a different amount of filler.

According to a second aspect of this invention, the fluororesin is selected from among an ethylene-tetrafluoro-ethylene copolymer (ETFE) and a tetrafluoroethylene-hexafluoropropylene-vinylidene fluoride terpolymer (THV). They are both particularly preferable as a material for the inner layer of a fuel hose, since they are highly impermeable to fuel, and flexible.

According to a third aspect of this invention, the inner layer is a single layer and the fluororesin contains one or both of:
(1) an effective amount of an electrically conductive material; and
(2) a reactive functional group capable of reacting with the thermoplastic resin forming the outer layer.

The electrically conductive material prevents the electric charging of the inner layer effectively, so that virtually no sparking may occur to the fuel hose during fuel supply when it is a filler neck hose or a breather hose. Its amount depends on the melt viscosity desired of the resin. The reaction of the functional group enables the inner layer to adhere still more firmly to the co-extruded outer layer.

According to a fourth aspect of this invention, the inner layer is a multilayer composed of an inside and an outside layers, and contains one or both of:
(1) an effective amount of an electrically conductive material in the fluororesin forming its inside layer; and
(2) a reactive functional group capable of reacting with the thermoplastic resin forming the outer layer in the fluororesin forming its outside layer.

When the inner layer is a multilayer, it is sufficient for at least its radially inside layer to be electrically conductive, or it is sufficient for at least its outside layer to contain a functional group capable of reacting with the thermoplastic resin forming the outer layer.

According to a fifth aspect of this invention, the thermoplastic resin is selected from among:
(1) a polyamide resin; and
(2) a polyethylene or polypropylene resin, an ethylene-propylene copolymer, or an olefinic thermoplastic elastomer.

All of these thermoplastic resins are suitable as a material for the outer layer because of their weatherability, abrasion resistance and oil resistance. A polyamide resin is, among others, preferred, since it contains an amino group reacting effectively with any functional group that the fluororesin may contain. It is easy to increase the amount of the amino groups which it contains, if the monomers to be employed and the amounts thereof are appropriately selected.

According to a sixth aspect of this invention, the polyamide resin is selected from among PA11, PA12, a PA6/12 copolymer, PA612 and olefin-modified PA6. These polyamide resins are suitable because of their high resistance to an antifreezing agent.

According to a seventh aspect of this invention, the outer layer is a single layer of a polyamide resin containing an amino group in the amount of at least 4 x 10⁻⁵ gram-equivalent per gram. The polyamide resin containing an amino group in the amount of at least 4 x 10⁻⁵ gram-equivalent per gram enables the outer layer to adhere still more firmly to the inner layer if the fluororesin forming the inner layer contains a reactive functional group. A polyamide resin containing such a large amount of amino groups can be obtained by various known methods without having its average molecular weight changed, or simply if its average molecular weight is lowered. It is to be noted, however, that the latter method is likely to yield a polyamide having an unexpectedly low melt viscosity.

According to an eighth aspect of this invention, the outer layer is a multilayer having an inside layer formed of a polyamide resin containing an amino group in the amount of at least 4 x 10⁻⁵ gram-equivalent per gram. The outer layer as defined adheres firmly to the inner layer.

According to a ninth aspect of this invention, the polyamide resin forming a single outer layer, or the inside layer of an outer multilayer contains a 1,8-diazabicyclo-(5,4,0)-undecene-7 salt. It enables the outer layer to adhere still more firmly to the inner layer.

According to a tenth aspect of this invention, the outer layer is surrounded by a protective resin or rubber layer formed by:
(1) any appropriate method including co-extrusion with the inner and outer layers if it is of a resin having a melt viscosity falling within the range as defined above; or
(2) any appropriate method excluding the co-extrusion if it is of a different resin or a rubber.

According to an eleventh aspect of this invention, the wall is at least partly corrugated. The corrugated wall formed after the co-extrusion of layers is a particularly good proof of the advantages of this invention including fuel impermeability and layer adhesion.

The above and other objects, features and advantages of this invention will become more apparent from the following description and the accompanying drawings.

### BRIEF DESCRIPTION OF THE DRAWING

Fig. 1 is a longitudinal sectional view of a co-extrusion head; and
Fig. 2 is a longitudinal sectional view of a different co-extrusion head.

### DETAILED DESCRIPTION OF THE INVENTION

The fuel hose of this invention has a multi-layered wall including an inner layer of a fluororesin and an outer layer of a thermoplastic resin. The layers are formed by co-extruding their materials. The materials as co-extruded have a ratio 1 : 40 or below in melt viscosity as measured by e.g. a capillary rheometer and expressed in Pa·s. Its inner or outer layer may be composed of a multilayer, and if such is the case, the materials forming any two layers have a difference in melt viscosity falling within the range as stated above. The outer layer may be surrounded by e.g. a protective layer formed of a resin, or rubber. The protective layer can be formed by co-extrusion with the inner and outer layers if it is of a resin having a melt viscosity falling within the range as defined above.

### Inner Layer:

Although the inner layer may be formed of any fluororesin, it is preferably of a fluororesin having a low melt viscosity (to provide a small difference in melt viscosity), and high flexibility, and making the inner layer adhere firmly to the outer layer. ETFE or THV is, among others, preferred when totally evaluated.

A preferred ETFE copolymer is obtained by employing ethylene and tetrafluoroethylene monomers in a molar ratio of ethylene : tetrafluoroethylene in the range of 70:30 to 30:70. A still more preferable ETFE copolymer further contains another monomer or monomers selected from fluoroolefins, vinylidene fluoride and propylene. A preferred THV terpolymer is obtained by copolymerizing tetrafluoroethylene (X), hexafluoropropylene (Y) and vinylidene fluoride (Z) in a molar ratio 40 to 85 (X) : 5 to 20 (Y) : 5 to 55 (Z), and more preferably in a molar ratio 60 to 85 (X) : 5 to 20 (Y) : 5 to 35 (Z). (X + Y + Z = 100)

The inner layer may be a single layer of a fluororesin, or a multilayer composed of two or more layers of different kinds of fluororesins, or a multilayer composed of two or more layers of different fluororesin compositions.

The fluororesin forming a single inner layer, or the radially inside layer of an inner multilayer preferably contains an electrically conductive material, such as carbon black or carbon nanotube, or a metal powder, so that it may be a good conductor preferably having a resistance not exceeding 1 × 10¹⁰Ω·cm. Care should, however, be taken not to raise the melt viscosity of the fluororesin greatly by the addition of an electrically conductive material.

The fluororesin forming a single inner layer, or the radially outside layer of an inner multilayer preferably contains a reactive functional group, or groups which are reactive with the thermoplastic resin forming the outer layer. Examples of the reactive functional groups include a carboxyl group, a group of carboxylic anhydride (e.g. maleic, phthalic, itaconic, citraconic or glutaconic anhydride), an epoxy group, a hydroxyl group, an isocyanate group, an aldehyde group, an ester group, an acid amide group, an amino group, a hydrolyzable silyl group and a cyano group. A carboxyl group, a carboxylic anhydride group, an epoxy group or a hydroxyl group is preferred because of their good reactivity with an amino group if the outer layer is of a polyamide resin.

A fluororesin containing a reactive functional group is preferably prepared by using an unsaturated monocarboxylic acid containing or not containing fluorine, an unsaturated dicarboxylic acid, an unsaturated alcohol, or an unsaturated compound containing an epoxy group as a copolymerizable monomer. Examples of the unsaturated monocarboxylic acids are acrylic, methacrylic, vinylacetic, pentenoic, hexenoic, octanoic, decenoic, dodecenoic and oleic acids. Examples of the unsaturated monocarboxylic acids containing fluorine are represented by formulas 1 to 10 below:

CH₂=CFCF₂CF₂COOH (1)

CH₂=CFCF₂CF₂CH₂COOH (2)

CH₂=CFCF₂CF₂CF₂COOH (3)

CH₂=CFCF₂CF₂CF₂CF₂CH₂COOH (4)

CH₂=CFCF₂CF₂CF₂CF₂COOH (5)

CH₂=CFCF₂OCF(CF₃)COOH (6)

CF₂=CFOCF₂CF₂COOH (7)

CF₂=CFOCF₂CF₂CF₂COOH (8)

CF₂=CFOCF₂CF₂CF₂CF₂COOH (9)

CF₂=CFOCF₂CF(CF₃)OCF₂CF₂COOH (10)

Examples of the unsaturated dicarboxylic acids are fumaric, itaconic, citraconic and glutaconic acids. Examples of the unsaturated alcohols are allyl alcohol, butenol, pentenol, hexenol and dodecenol. Examples of the unsaturated compounds containing an epoxy group are glycidyl methacrylates or acrylates, and acryl glycidyl ethers.

Another preferable method of preparing a fluororesin containing a reactive functional group includes grafting to a fluororesin a compound containing a group capable of being bonded thereto by grafting (e.g. an unsaturated bond), as well as the functional group. This method can be carried out by a radical reaction using e.g. a peroxide. Still another preferable method includes applying ion radiation to a fluororesin in the presence of an ethylenically unsaturated compound having ethylene group, such as maleic anhydride.

### Outer Layer:

Although the outer layer may be formed from any thermoplastic resin, it is preferably of a polyamide, polyethylene or polypropylene resin, an ethylene-propylene copolymer, or an olefinic thermoplastic elastomer. A polyamide selected from PA11, PA12, a PA 6/12 copolymer, PA612 and olefin-modified PA6 is, among others, preferred. Up to, say, 30% of a plasticizer may be added to the polyamide to improve its flexibility. Other materials, such as an antioxidant and a processing aid, can also be added to the polyamide. A thermoplastic fluororesin can also be used for the outer layer, though its use may not offer much advantage.

The outer layer may be a single layer of a thermoplastic resin, or a multilayer composed of two or more layers of different kinds of thermoplastic resins. It may alternatively be composed of two or more layers of different thermoplastic resin compositions, or different polyamide materials containing different amounts of amino groups.

If a polyamide resin is used to form a single outer layer, or the radially inside layer of an outer multilayer, it is preferable to use one containing a larger amount of amino groups than usual. The amino groups enable the outer layer to adhere firmly to the inner layer, particularly if the material of the inner layer contains a reactive functional group. The polyamide resin may contain at least 4 × 10⁻⁵ gram-equivalent of amino groups per gram.

It is not advisable to increase the amount of amino groups in a polyamide resin by lowering its average molecular weight, but it is preferable to do so, while maintaining its average molecular weight. More specifically, a preferable method includes mixing a diamine such as metaxylylenediamine, paraxylylenediamine, hexamethylenediamine or dodecamethylene-diamine, or another amino compound in a molten state with a polyamide. Another preferable method includes modifying the end carboxyl group of a polyamide with an amino group by, for example, combining it with a diamine compound. Preferred examples of the amino compounds are aliphatic diamines or polyamines, γ-aminopropyltrimethoxysilane, N-β(aminoethyl)γ-aminopropylmethyldiethoxysilane and N-cyclohexyl-γ-aminopropyltrimethoxysilane.

The addition of an organic ammonium or phosphonium salt ensures an improved layer adhesion. While any organic ammonium salt can be used, it is preferable to use, for example, any of various DBU salts, such as of carboxylic acids or phenolic resins. The DBU salts of carboxylic acids which can be used are the DBU salt of naphthoic or sorbic acid, or a combination of their DBU salts. Other preferred examples of the organic ammonium salts include tetrabutyl-ammonium hydrogensulfate, tetramethylammonium hydrogen-sulfate, tetraethylammonium hydrogensulfate, tetraoctyl-methylammonium hydrogensulfate, tridodecylmethylammonium hydrogensulfate and trimethylbenzylammonium hydrogensulfate, or a combination thereof, or a combination thereof with any DBU salt as mentioned above.

It is also possible to use any organic phosphonium salt, for example, tetrabutylphosphonium chloride, tetrabutylphosphonium bromide, tributyl(methoxypropyl)-phosphonium chloride, benzyltriphenylphosphonium chloride, benzyltrioctylphosphonium chloride, tetrabutylphosphonium benzotriazole, trioctylethylphosphonium benzotriazole or tetraphenylphosphonium bromide, or a combination thereof. It is also possible to use, for example, phosphonium benzotriazolate or tolyltriazolate containing one of tetrabutyl, tetraoctyl, methyltrioctyl, butyltrioctyl, phenyltributyl, benzyltributyl, benzyltricyclohexyl, benzyl-trioctyl, butyltriphenyl, octyltriphenyl, benzyltriphenyl, diphenyldi(diethylamino), phenylbenzyldi(dimethylamino), trifluoromethylbenzyl, and tetrafluoropropyltrioctyl groups.

If a single outer layer, or the inside layer of an outer multilayer is formed of polyethylene, polypropylene, an ethylene-propylene copolymer, or an olefinic thermoplastic elastomer, it is preferable to add, for example, an amino, carboxyl, carboxylic anhydride, methyl methacrylate, ethyl acrylate, glycidyl methacrylate or methyl acrylate group to the material by any appropriate method.

### Methods of Controlling Ratio in Melt Viscosity between Layers:

According to this invention, it is essential that the materials as co-extruded to form any two layers have a ratio 1 : 40 or below in melt viscosity as expressed in Pa·s, as stated before. It is possible to select an appropriate fluororesin and an appropriate thermoplastic resin which satisfy the above requirement. If any adjustment is necessary, it will be effective to prepare a fluororesin, or thermoplastic resin having an appropriate average molecular weight. It will also be effective to alter the materials to be added to any such resin, or the amounts thereof. It is preferable to rely upon a well-balanced combination of those methods. It will generally be adequate to lower the melt viscosity of the fluororesin for the inner layer, while raising that of the thermoplastic resin for the outer layer.

### Co-extrusion:

For the purpose of this invention, co-extrusion is a method of extrusion molding in which the materials employed to form the layers of a multi-layered wall of a hose are extruded together in a mutually coaxial relation, and caused to adhere to each other in the molten state. It can be carried out by using any known apparatus including a co-extrusion head.

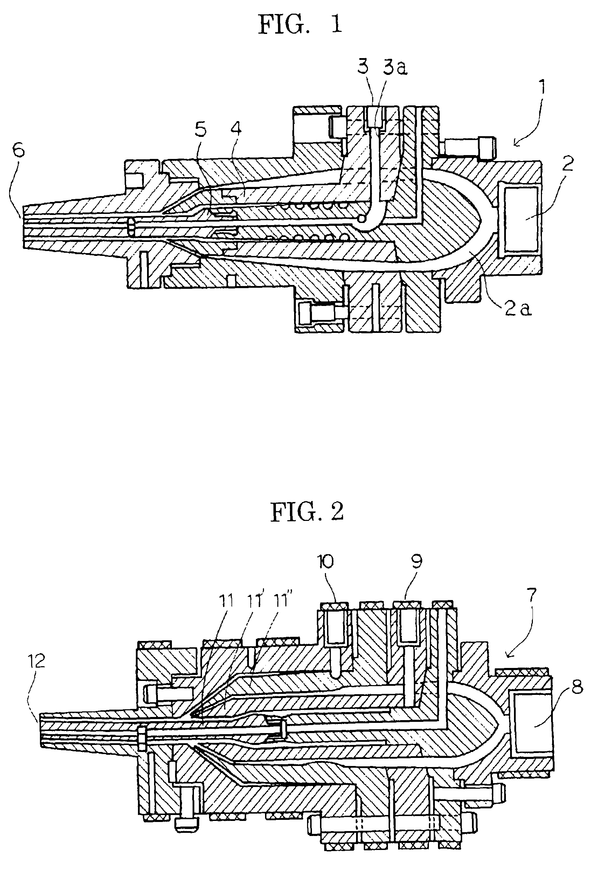

Fig. 1 shows a known co-extrusion head designed for molding a fuel hose having a two-layered wall. The head 1 has a port 2 to which an extruder not shown can be connected for extruding the material for the outer layer of the wall, and another port 3 to which another extruder not shown, either, can be connected for extruding the material for its inner layer. The material for the outer layer is supplied to an outer die 4 through the port 2 and a guide passage 2a, while the material for the inner layer is supplied to an inner die 5 through the port 3 and a guide passage 3a, so that the two kinds of materials are extruded together in a mutually coaxial relation through an extrusion nozzle 6.

The use of the apparatus shown in Fig. 1 will be explained by a more specific example. The extruder connected to the port 2 is charged with pellets of PA12, while the extruder connected to the port 3 is charged with pellets of ETFE. The pellets are melted, and the molten masses thereof are passed through the dies in the co-extrusion head 1 held at a temperature of 240°C to 300°C to form a two-layered structure. The two-layered structure leaving the nozzle 6 is cooled to give, for example, a straight hose having an inside diameter of 3 to 60 mm and a wall thickness of 0.4 to 3.0 mm. It can be shaped by an appropriate device not shown into a hose having an at least partly corrugated wall, or a curved hose, as desired.

Fig. 2 shows a known co-extrusion head designed for making a fuel hose having a three-layered wall. The head 7 has a first port 8 to which an extruder not shown can be connected for extruding the material for an intermediate layer, a second port 9 to which an extruder not shown can be connected for extruding the material for an inner layer, and a third port 10 to which an extruder not shown can be connected for extruding the material for an outer layer. The three kinds of materials are supplied to three dies 11,11' and 11" through guide passages similar to those shown in Fig. 1, and extruded together through a nozzle 12 to form a three-layered structure having three coaxial layers.

### EXAMPLES

### Preparation of Fuel Hoses:

Fuel hoses embodying this invention and comparative ones were prepared as shown at Examples 1 to 29 and Comparative Examples 1 to 6, respectively, in Tables 1 to 10 below. Each hose had a wall composed of an inner and an outer layer each formed from the material shown in the corresponding one of Tables 1 to 10. Each hose had a generally straight wall having a corrugated portion, and its straight wall portion had an inside diameter of 25 mm and a thickness of 1.2 mm (consisting of an inner layer thickness of 0.30 mm and an outer layer thickness of 0.90 mm). Some of the hoses had an inner multilayer consisting of a radially inside layer and a radially outside layer each having a thickness of 0.15 mm.

In each table, the material for the inner wall layer is marked with a circle, or circles. If there are two circles, the inner wall layer consists of two layers and the two circles indicate the materials for its inside and outside layers, respectively. If there is no explicit statement, the material for the inside layer is shown above that for the outside. Compound A appearing in Table 9 is of the formula 5 shown before. In all cases, the outer layer is of PA12 containing 5% by weight of a plasticizer. Each table shows at *1 the ratio in melt viscosity as expressed in Pa·s between the materials for the inner and outer layers, or between the materials for any two layers having the largest difference in melt viscosity from each other if the inner layer consists of two layers. The ratio shown as, for example, 10 means that a melt viscosity of the material having the higher or highest melt viscosity is 10 when a melt viscosity as that of the material having the lower or lowest melt viscosity is assumed to be 1. Each table also shows at *2 the amount of the amino groups which the polyamide for each hose contains, as, for example, 8 x 10⁻⁵ gram-equivalent per gram.

### Evaluation of Hoses:

Each fuel hose was filled with fuel C as gasoline for evaluation, and was left to stand at a temperature of 40°C for 168 hours. Then, it was emptied, and filled again with new fuel C. It was weighed immediately thereafter, and after it had been left to stand at a temperature of 40°C for 72 hours, it was weighed again. Its weight was compared with its initial weight, and their difference was used for calculating the amount (g) of the fuel which had permeated through the wall of the hose per meter of hose length each day. The same evaluation was repeated with another type of gasoline for evaluation, fuel C/E10. The results are shown in each table.

Each hose was also cut along its length into four equal segments. An attempt was made to separate the inner and outer layers in one of the segments from each other, and the force as required for separating them by a distance of 1 cm was calculated as a measure of the adhesive strength (N/cm) between the two layers. The results are shown in each table.

**Table 1**

| | | | Example | | | | Comparative Example | |
|---|---|---|---|---|---|---|---|---|
| | | | 1 | 2 | 3 | 4 | 1 | 2 |
| Inner layer material | ETFE | | ○ | ○ | | | ○ | |
| | ETFE containing a maleic anhydride group | | | | ○ | ○ | | ○ |
| Outer layer material | PA12, 8×10⁻⁵(*2) | 10*1 | ○ | | ○ | | | |
| | | 35*1 | | ○ | | ○ | | |
| | | 50*1 | | | | | ○ | ○ |
| Amount of permeation (g/m/day) | | Fuel C | 0.019 | 0.021 | 0.021 | 0.022 | 0.029 | 0.034 |
| | | Fuel C/E10 | 0.035 | 0.039 | 0.040 | 0.040 | 0.049 | 0.052 |
| Adhesive strength (N/cm) | | | 76 | 73 | Sample broken | Sample broken | 9 | 13 |

| | | | | | | | | |
|---|---|---|---|---|---|---|---|---|
| *1: Ratio in viscosity between inner and outer layer materials | | | | | | | | |
| *2: Amount of amino groups in polyamide (g-equiv./g) | | | | | | | | |

**Table 2**

| | | | Example | | | | Comparative Example | |
|---|---|---|---|---|---|---|---|---|
| | | | 5 | 6 | 7 | 8 | 3 | 4 |
| Inner layer material | Electrically conductive ETFE | | ○ | ○ | | | ○ | |
| | Electrically conductive ETFE containing a maleic anhydride group | | | | ○ | ○ | | ○ |
| Outer layer material | PA12 (10*1) | 2 × 10⁻⁵ *2 | | | | | ○ | ○ |
| | | 5 × 10⁻⁵ *2 | ○ | | ○ | | | |
| | | 8 ×10⁻⁵ *2 | | ○ | | ○ | | |
| Amount of permeation (g/m/day) | | Fuel C | 0.022 | 0.022 | 0.023 | 0.024 | 0.022 | 0.024 |
| | | Fuel C/E10 | 0.036 | 0.034 | 0.035 | 0.035 | 0.035 | 0.035 |
| Adhesive strength (N/cm) | | | 72 | 76 | Sample broken | Sample broken | 15 | 20 |

**Table 3**

| | | | Example | | |
|---|---|---|---|---|---|
| | | | 9 | 10 | 11 |
| Inner layer material | Radially inside layer | ETFE | ○ | | |
| | | Electrically conductive ETFE | | | ○ |
| | | Electrically conductive ETFE containing a maleic anhydride group | | | |
| | Outside layer | ETFE containing a maleic anhydride group | ○ | ○ | ○ |
| Outer layer material | PA12 (10*1) | 8 × 10⁻⁵ *2 | ○ | ○ | ○ |
| | | 2 × 10⁻⁵ *2 | | ○ | |
| Amount of permeation (g/m/day) | | Fuel C | 0.010 | 0.021 | 0.01 |
| | | Fuel C/E10 | 0.019 | 0.039 | 0.020 |
| Adhesive strength (N/cm) | | | Sample broken | Sample broken | Sample broken |

**Table 4**

| | | | Example |
|---|---|---|---|
| | | | 12 |
| Inner layer material Inner layer | Electrically conductive ETFE containing a maleic anhydride group | | ○ |
| Outer layer material | PA12 (10*1) | 8 × 10⁻⁵ *2 | ○ |
| | | 2 × 10⁻⁵ *2 | ○ |
| Amount of permeation (g/m/day) | | Fuel C | 0.022 |
| | | Fuel C/E10 | 0.035 |
| Adhesive strength (N/cm) | | | Sample broken |

**Table 5**

| | | | Example | |
|---|---|---|---|---|
| | | | 13 | 14 |
| Inner layer material | Copolymer of electrically conductive ETFE and dodecenoic acid | | ○ | |
| | Copolymer of electrically conductive ETFE and oleic acid | | | ○ |
| Outer layer material | PA12 (10*1) | 8 × 10⁻⁵ *2 | ○ | ○ |
| Amount of permeation (g/m/day) | | Fuel C | 0.024 | 0.024 |
| | | Fuel C/E10 | 0.038 | 0.040 |
| Adhesive strength (N/cm) | | | Sample broken | Sample broken |

**Table 6**

| | | | Example | |
|---|---|---|---|---|
| | | | 15 | 16 |
| Inner layer material | Electrically conductive ETFE | | ○ | |
| | Electrically conductive ETFE containing a maleic anhydride group | | | ○ |
| Outer layer material | HDPE (9*1) | 8 × 10⁻⁵ *2 | ○ | |
| | | 15 × 10⁻⁵ *2 | | ○ |
| Amount of permeation (g/m/day) | | Fuel C | 0.022 | 0.022 |
| | | Fuel C/E10 | 0.036 | 0.037 |
| Adhesive strength (N/cm) | | | 61 | Sample broken |

**Table 7**

| | | | | Example | | |
|---|---|---|---|---|---|---|
| | | | | 17 | 18 | 19 |
| Inner layer material | Radially inside layer | ETFE | | ○ | | |
| | | Electrically conductive ETFE | | | | ○ |
| | Outside layer | ETFE containing a maleic anhydride group | | ○ | ○ | ○ |
| Outer layer material | HDPE (9*1) | | 8 × 10⁻⁵ *2 | ○ | ○ | ○ |
| | | | 15 × 10⁻⁵ *2 | | ○ | |
| Amount of permeation (g/m/day) | | | Fuel C | 0.010 | 0.021 | 0.01 |
| | | | Fuel C/E10 | 0.019 | 0.039 | 0.020 |
| Adhesive strength (N/cm) | | | | Sample broken | Sample broken | Sample broken |

**Table 8**

| | | | Example | | | | Comparative Example | |
|---|---|---|---|---|---|---|---|---|
| | | | 20 | 21 | 22 | 23 | 5 | 6 |
| Inner layer material | Electrically conductive THV | | ○ | ○ | | ○ | ○ | ○ |
| | Copolymer of electrically conductive THV and oleic acid | | | | ○ | | | |
| | THV | | | ○ | | | | |
| | Copolymer of THV and oleic acid | | | | | ○ | | |
| Outer layer material | PA12 (10*1) | 2 × 10⁻⁵ *2 | | | | | | ○ |
| | | 8 × 10⁻⁵ *2 | ○ | ○ | ○ | ○ | | |
| | PA12 (50*1) | 8 × 10⁻⁵ *2 | | | | | ○ | |
| Amount of permeation (g/m/day) | | Fuel C | 0.029 | 0.027 | 0.030 | 0.029 | 0.038 | 0.037 |
| | | Fuel C/E10 | 0.046 | 0.043 | 0.045 | 0.047 | 0.059 | 0.055 |
| Adhesive strength (N/cm) | | | 62 | 66 | Sample broken | Sample broken | 12 | 21 |

**Table 9**

| | | | Example | | | |
|---|---|---|---|---|---|---|
| | | | 24 | 25 | 26 | 27 |
| Inner layer material | Copolymer of ETFE and compound A | | ○ | | | |
| | Copolymer of ETFE and compound A (electrically conductive) | | | ○ | | |
| | Copolymer of THV and compound A | | | | ○ | |
| | Copolymer of THV and compound A (electrically conductive) | | | | | ○ |
| Outer layer material | PA12 (10*1) | 8 × 10⁻⁵ *2 | ○ | ○ | ○ | ○ |
| Amount of permeation (g/m/day) | | Fuel C | 0.021 | 0.022 | 0.028 | 0.028 |
| | | Fuel C/E10 | 0.038 | 0.035 | 0.041 | 0.043 |
| Adhesive strength (N/cm) | | | Sample broken | Sample broken | Sample broken | Sample broken |

**Table 10**

| | | | Example | |
|---|---|---|---|---|
| | | | 28 | 29 |
| Inner layer material | Electrically conductive THV | | | ○ |
| | THV | | ○ | ○ |
| Outer layer material | PA12 containing DBU salt (10*1) | 8 × 10⁻⁵ *2 | ○ | ○ |
| Amount of permeation (g/m/day) | Fuel C | | 0.022 | 0.026 |
| | Fuel C/E10 | | 0.040 | 0.044 |
| Adhesive strength (N/cm) | | | Sample broken | Sample broken |
| PA12 containing DBU salt : containing DBU salt of carboxylic acid | | | | |

While the invention has been described by its preferred embodiments, it is to be understood that variations or modifications will be easily made by those skilled in the art without departing from the scope of this invention which is defined by the appended claims.

## Claims

1. A fuel hose comprising an inner single layer or multilayer of a fluororesin and an outer single layer or multilayer of a thermoplastic resin, wherein the inner and outer layers are formed by co-extruding materials for the layers, any two materials having a ratio 1 : 40 or below in melt viscosity as expressed in Pa·s.

2. The hose as set forth in claim 1, wherein the fluororesin is an ethylene-tetrafluoroethylene copolymer (ETFE) or a tetrafluoroethylene-hexafluoropropylene-vinylidene fluoride terpolymer (THV).

3. The hose as set forth in claim 1 or 2, wherein the fluororesin of the single inner layer, or a radially inside layer of the inner multilayer contains an electrically conductive material.

4. The hose as set forth in any one of claims 1 to 3, wherein the fluororesin has a resistance not exceeding 1 x 10¹⁰ Ω·cm.

5. The hose as set forth in any one of claims 1 to 4, wherein the fluororesin of the single inner layer, or a radially outside layer of the inner multilayer contains at least one kind of reactive functional group.

6. The hose as set forth in any one of claims 1 to 5, wherein the thermoplastic resin is a polyamide.

7. The hose as set forth in claim 6, wherein the polyamide of the single outer layer, or a radially inside layer of the outer multilayer contains amino groups in the amount of at least 4 × 10⁻⁵ gram-equivalent per gram.

8. The hose as set forth in claim 6, wherein the polyamide contains a DBU salt.

9. The hose as set forth in any one of claims 1 to 8, wherein the outer layer is surrounded by a protective resin or rubber layer.

10. The hose as set forth in any one of claims 1 to 9, wherein the hose has its wall corrugated along at least a part of its length.
